# EUROPEAN PATENT SPECIFICATION

(11) **EP 0 655 365 B1**
(45) Date of publication and mention of the grant of the patent: **21.01.1998**
(21) Application number: 94500167.5
(22) Date of filing: 26.10.1994
(51) Int. Cl.: B60N 2/46

(54) **Vehicle seat armrest folding mechanism**
Mechanismus einer ausschwenkbaren Armlehne für Fahrzeugsitze
Mécanisme d'un accoudoir pliable pour sièges de véhicules

(30) Priority: 29.10.1993 ES 9302266
(43) Date of publication of application: 31.05.1995
(73) Proprietor: INDUSTRIAS ESTEBAN, S.A., E-31012 Pamplona (Navarra) (ES)
(72) Inventor: Remacha Indurain , Angel Maria, Pamplona ( Navarra ) (ES)
(74) Representative: Carpintero Lopez, Francisco

(56) References cited:
- EP-A- 0 133 065
- WO-A-93/11964
- DE-A- 3 529 506
- DE-A- 3 705 769
- ES-Y- 295 215

## Description

### OBJECT OF THE INVENTION

The invention relates to an armrest folding mechanism essentially applicable to vehicle seat armrests, for instance in passenger coaches and the like, though it can also be used in folding other ancillary seat objects, for instance foot-rests, folding trays, leg-rests and so forth.

The mechanism relies on a sinuous sector provided on a projection from the seat which, with the rotatory steps of a cam fitted between a pair of plates lying at the end at which the armrest is hinged, allow the armrest to take up a normal working position, a folded down position and a folded up position, merely by pulling or pushing the said armrest. The lugs between which the cam lies to turn freely relative to the same and the seat projection with the sinuous edge for the cam to slide, have an axial bore facing each other for a turning shaft of the armrest as such.

### BACKGROUND OF THE INVENTION

Many kinds of mechanisms are known to allow vehicle armrests to be folded from a horizontal or normal working position of the armrest as such to a folded up or down position, thereby to allow travellers to reach inner seats, for it is well-known that there is little space between seats and the backs of the front seats in a passenger vehicle.

Spanish utility model 295,215, belonging to the same applicant and corresponding to the preamble of claim 1 of the present invention, discloses a folding device in vehicle seat armrests which already provides for the armrest to take up the three stable positions, namely a horizontal and normal working position, an upward vertical position and a downward vertical position, thereby not only to allow travellers access to inner seats, but to enable passengers to move along the aisle when carrying objects or baggage which for want of the armrest looking down could be hampered or impaired by the armrests.

The folding device subject of such Spanish utility model 295,215 can be considered to be an efficient device for its purpose, albeit having an intricate construction, for in addition to a cam and the conventional jointing and hinging means between the arm and the seat body, a catch, a band and other elements are required for the armrest to be stable in its three positions, sound signalling being moreover provided for the three positions of the armrest.

German patent DE-A-3 529 506 is known, which discloses a folding armrest based in a profile that in collaboration with a plate provided with two slits which act as guiding and with a guiding bolt the armrest moving is achieved and thereof the functioning possible positions, that is to say, rest and support.

### DESCRIPTION OF THE INVENTION

The folding mechanism according to the invention has the features set forth in claim 1.

The mechanism subject hereof was conceived in order that the armrest might take up the three positions mentioned hereinbefore, in an extremely simple and functionally effective manner, and hence at very little cost, without additional elements being required, and relies upon a cam that moves along with the armrest when the latter rotates, though the cam turns independently of the armrest, the said cam working with a sinuous sector on a seat projection, being particular in that there is no sound signalling for the user in the aforesaid three positions.

In particular, the mechanism is designed to be located on the side and rear seat portion, close to the backrest, viz. close to the connection of the seat and the backrest.

Structurally, the mechanism comprises a projection or extension of the side of the seat frame, which projection is largely circular in outline and has a sinuous conformation on a large upper arc in which both convexly and concavely curved sectors and further projections are defined, all of which is designed to provide means to functionally associate a freely turning cam mounted between a pair of plates which emerge from the very end of the armrest, being particular in that the two plates and the seat projection all have facing holes for the passage of the respective turning shaft, the turning element being the armrest whereas the projecting seat portion is fixed.

The cam has a rectangular conformation or outline with two mildly concavely curved sides, and the other two sides, facing each other, are more acutely concave, i.e. they can be deemed as recesses with a curved bottom, causing the same to be constantly supported through different points or portions thereof on different points or portions of the sinuous sector constituted by the seat projection, and hence in accordance with the arc drawn by the armrest on turning up or down, the cam will not only move but will turn on its support and abutments provided upon the sinuous edge of the seat projection, thereby allowing the three positions of the armrest to be attained and such positions to be stable.

As for the sinuous edge of the seat projection, such begins at the rear end with a projection and then defines a deep recess, continuing as a rising convexly curved slope, ending in another projection to continue into a large concave recess, ending in a higher and sharper projection, and hence relying upon this sector, each time the armrest moves arc-wise, the cam will follow different turning movements thereof, moving along the said sector, thereby to enable not only upward or downward armrest movements, but to achieve stability in each of the armrest positions.

In short, the mechanism relies upon the cam freely rotating relative to the arm, and upon the relationship between the said cam and the sinuous conformation of the projection of the corresponding seat frame, and therefore by manually driving the seat arm to fold the same vertically, the said arm can be folded down to lie on the same plane as or below the plane of the seat cushion, and up to lie as an extension of the seat cushion backrest, and finally the arm in question can be hung in the working position, i.e. fulfilling its function as an armrest as such.

It should finally be noted that the layout of the mechanism, as mentioned hereinbefore, means that the various positions of the armrest are unavoidably reached and that no error is possible, and there is hence no need for sound signalling means to exist for such positions.

### DESCRIPTION OF THE DRAWINGS

In order to complement the above description and contribute to the complete understanding of the characteristics of this invention, a set of drawings is attached to the specification which, while purely illustrative and not fully comprehensive, shows the following:
Figure 1.- Is a side elevation view of the mechanism of the invention, with the armrest in the normal working position.
Figure 2.- Is a schematic view of the cam taking up a position relative to the sinuous sector of the seat projection with the arm folded down.
Figure 3.- Shows another position of the cam with the arm folded up, i.e. as an extension of the seat backrest.
Figure 4.- Is another different position of the same cam, when the arm starts to rise from its working position as shown in figure 1, to reach the stable position at such lifted arm position.
Figure 5.- Shows precisely the position of the cam with the arm full stably folded up.
Figure 6.- Finally shows the next movement of the cam from a position as shown in the previous figure to reach a position as in figure 2, i.e. with the arm folded.

### PREFERRED EMBODIMENT OF THE INVENTION

The above figures show that the mechanism of the invention is designed to fold the respective arm (1) constituting the armrest of a seat (2) preferably within a vehicle, although its application to other folding elements or objects should not be ruled out.

In any event, when the mechanism is used for folding armrests (1) in a vehicle seat (2), the frame of the seat (2) extends into an upper projection (3) that is largely circular in outline, albeit having a sinuous sector (4) on a large upper arc thereof.

The hinged end of the arm or armrest (1) itself has a pair of parallel plates (5) between which a cam (6) is mounted upon a turning shaft (7) which means that the cam (6) turns freely relative to the plates (5) on the arm (1), and in turn to move along with the latter when it turns, for the said arm (1) is hinged through a shaft (8), since the plates (5) between which the cam (6) is positioned have a hole facing a hole in the projection (3) of the seat (2), thereby articulating the said arm or armrest (1).

It will be noticed that the cam (6) could be said to be rectangular in shape, with slightly concave larger sides (6a, 6b) and far more concave shorter sides (6c, 6d).

The sinuous edge (4) itself on the projection (3) leading from the seat frame has a first projection (3a) followed by a recess (3b), then extending into a convexly curved slope (3c) and then into another small projection (3d), to continue as a large deep concavity (3e), ending at the other end, viz. the end opposite the projection (3a), in a sharper projection (3f).

The cam is itself provided not only with concavities (6a, 6b, 6c, 6d) but with round vertices (7a, 7b, 7c, 7d).

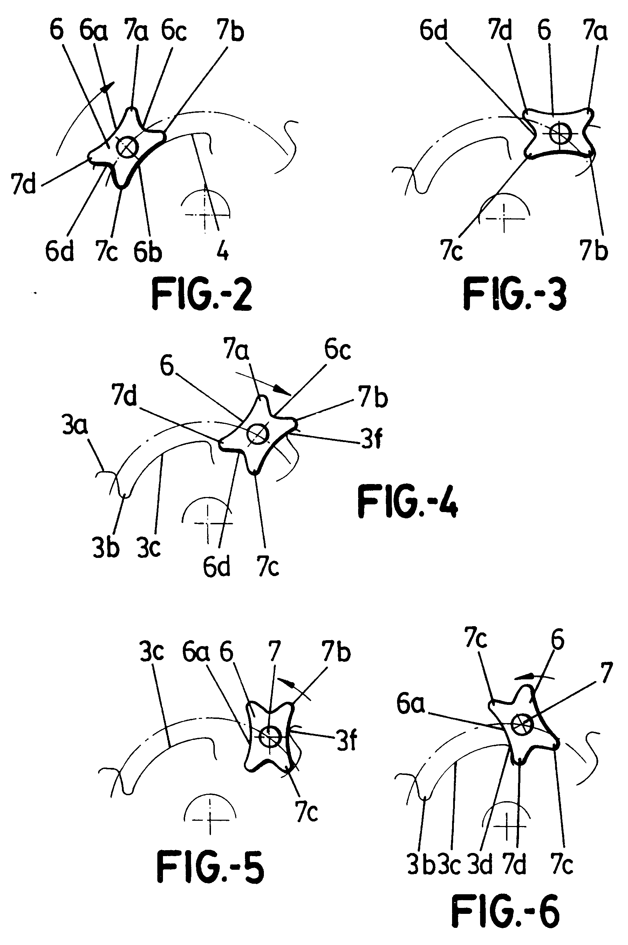

Now then, taking figure 2, where the cam (6) is in a position in which the arm (1) is folded down, retracted into the side of the seat (2) to expedite passenger access to and exit from the seat, and in which the cam (6) is supported through its concavity (6b) on the convexly curved slope (3c) with the vertex (7c) in recess (3b) of the sinuous edge (4) as such, when the arm (1) is manually driven upwards from the said position, the cam (6) moves sliding along the convex surface (3c) of the sinuous sector (4), reaching a position as in figure 3, after the vertex (7a) abuts against the upper projection (3f), causing the cam (6) to tend to take up a position as in this figure 3, this being the position in which the arm (1) is folded up as an extension of the seat (2) backrest.

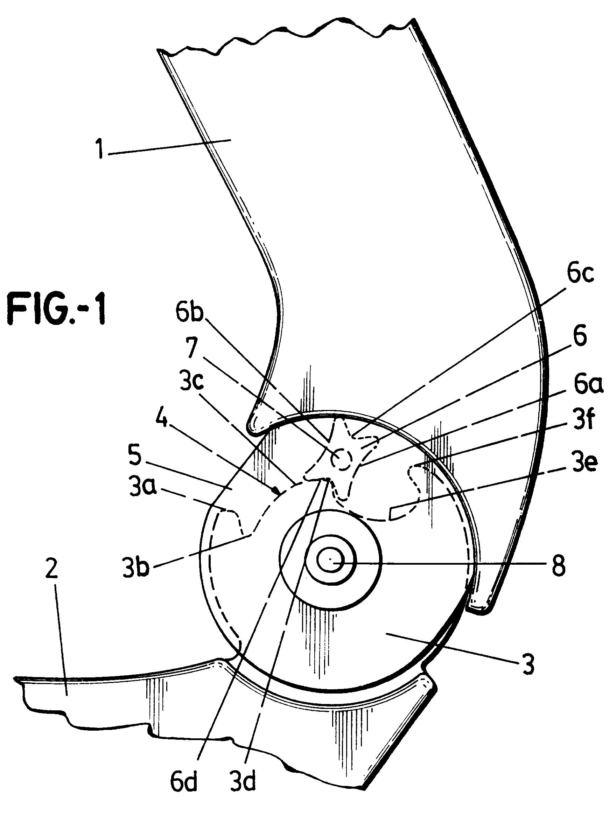

When the arm (1) is in the upward position, it is gradually folded down in such a way that the cam (6) and particularly its vertex (7c) abuts against the projection (3d) causing the cam to turn until the concavity (6d) is positioned precisely at the projection (3d), as shown in figure 1, this position being the stable arm (1) working position, for passenger support.

If the arm (1) must be released from this position to move to a different position, in order not to hinder passenger access, to or from the projection, the arm will be folded upwards manually to reach a position as shown in figure 4, in such a way that the cam (6) impinges upon the projection (3f) with the vertex (7b), the latter being different from the vertex (7a) which will cause an abutment from a position as in figure 2 to a position as in figure 3, this abutment of the cam through its vertex (7b) against the projection (3f) causing the said cam (6) to turn in the direction of the arrow shown in figure 5, the vertex (7c) on the cam (6) contemporaneously abutting against the concave portion (3e) thus reaching the stable position, with the arm fully folded up.

The next manual operation will be a downward folding, in which the cam (6) abuts, as shown in figure 2, through its concave portion (6a), against the projection (3d) thereby causing the cam to turn to slide along the arched slope (3c) until it again reaches the position shown in figure 2, i.e. until the vertex (7c) is housed within the recess (3b), with the arm (1) fully folded down.

In other words, in accordance with the above movements and based upon the cam (6) rotations and movement, the arm (1) can take up the normal working position, i.e. as shown in figure 1, an upwardly folded position extending with the seat backrest, as shown in figure 3, the stable position of which is shown in figure 5, and a downward position as shown in the diagram of figure 2.

## Claims

1. A vehicle seat armrest folding mechanism, that is designed to allow the arm (1) constituting the armrest to take up a first horizontal working position, a second fully folded down position and a third fully folded up position, the actual mechanism being located on a side area of the seat close to the intersection with the backrest, characterised by an extension (3) of the seat frame (2) having a sinuous sector (4) supporting a cam (6) which is mounted freely upon a shaft (7) having an axis of rotation parallel to the axis of rotation of the arm (1), whereby the cam (6) is arranged between two parallel plates (5) lying at the lower end of the arm (1), the position of said plates (5) matching the position of the extension (3) of the seat frame (2), said extension (3) and said plates (5) having holes facing one another for mounting the corresponding turning shaft (8) of the arm (1).

2. A vehicle seat armrest folding mechanism according to claim 1, characterised in that the sinuous sector (4) on the extension (3) belonging to the seat frame has a first projection (3a) followed by a recess (3b) which extends into a convex branch (3c), followed by another projection (3d) to continue into a large concavity (3e) and end facing the projection (3) as another sharp projection (3f) such that the cam (6) is supported by this sinuous conformation when the arm (1) turns, to allow the said cam (6) to turn in suitable directions and the arm (1) itself to take up stable positions, namely the working, folded down and folded up positions.

3. A vehicle seat armrest folding mechanism, as in the above claims, characterised in that the cam (6) is rectangular in outline with two slightly concavely curved sides (6a, 6b), and two other sides (6c, 6d) having a much deeper concavity, four round vertices (7a, 7b, 7c, 7d) being defined in order for the concavities and vertices to define cam (6) moving, abutting and turning means when the arm (1) respectively moves up and down hinged about the shaft (8).

## Patentansprüche

1. Mechanismus einer ausschwenkbaren Armlehne für Fahrzeugsitze, der es ermöglicht, dass der die Armlehne bildende Arm (1) eine erste waagerechte Gebrauchsstellung, eine zweite ganz nach oben ausgeschwenkte Stellung und eine dritte ganz nach unten abgeklappte Stellung einnehmen kann, wobei sich dieser Mechanismus seitlich am Sitz in der Nähe der Verbindung mit der Rückenlehne befindet, dadurch gekennzeichnet, dass eine Verlängerung (3) des Rahmens des Sitzes (2) eine kurvige Strecke (4) aufweist, auf der sich eine frei auf der Achse (7) montierte Nocke (6) abstützt, dass eine zur Schwenkachse des Armes (1) parallele Schwenkachse vorgesehen und die Nocke (6) Platten (5) zwischen zwei parallelen angeordnet ist, die sich am unteren Ende des Armes (1) befinden, wobei die Stellung dieser Platten (5) der Stellung der Verlängerung (3) des Rahmens des Sitzes (2) entspricht und die Verlängerung (3) sowie die Platten (5) gegeiüberliegende Öffnungen für die Montage der Schwenkachse (8) des Armes (1) aufweisen.

2. Mechanismus einer ausschwenkbaren Armlehne für Fahrzeugsitze, nach Anspruch 1 dadurch gekennzeichnet, dass das gebogene Profil (4) der Verlängerung (3) des Sitzrahmens einen anfänglichen Vorsprung (3a) aufweist, dem ein Einschnitt (3b), eine konvexe Rampe (3c) sowie ein weiterer Vorsprung (3d) folgt, um sich in Form einer starken Konkavität fortzusetzen und gegenüber dem Vorsprung (3) in einem weiteren spitzen Vorsprung (3f) so zu enden, dass sich die Nocke (6) während der Schwenkbewegung des Armes (1) auf diesem kurvigen Bereich abstützt und in den geeigneten Richtungen dreht, um feste Stellungen einzunehmen, die der Gebrauchsstellung, der nach unten ausgeschwenkten und der nach oben ausgeschwenkten Stellung des Armes (1) entsprechen.

3. Mechanismus einer ausschwenkbaren Armlehne für Fahrzeugsitze, nach den vorstehenden Ansprüchen dadurch gekennzeichnet, dass die Nocke (6) eine rechteckige Kontur mit zwei leicht konkaven Seiten (6a und 6b) sowie zwei weitere, viel stärker konklave Seiten (6c und 6d) aufweist und vier abgerundete Scheitel (7a, 7b, 7c, 7d) gebildet werden, wobei diese Konkavitäten und Scheitel die Mittel für das Gleiten, den Anschlag und die entsprechende Verschwenkung der Nocke (6) während der gelenkigen Auf- und Abwärtsbewegung des Armes (1) auf der Achse (8) bilden.

## Revendications

1. Mécanisme d'accoudoirs pliable pour sièges de véhicules, destiné à Pouvoir permettre que le bras (1) qui constitue l'accoudoir puisse occuper une Première position horizontale d'utilisation, une deuxième position pliante totale vers le bas et une troisième position pliante totale vers le bas, l'emplacement de ce mécanisme se trouvant dans une zone latérale du siège proche de l'intersection avec le dossier, caractérisé par le fait qu'un prolongement (3) de la charpente du siège (2) qui a un tronçon sinueux (4) sur lequel s'appuie une came (6) qui est montée librement sur un axe (7) pourvu d'un axe de rotation parallèle à l'axe de rotation du bras (1), où la came (6) est placée entre deux plaques parallèles (5) placées à l'extrémité inférieure du bras (1), la position de ces plaques (5) faisant jeu avec la position du prolongement (3) de la charpente du siège (2), ce prolongement (3) et ces plaques (5) ayant des orifices l'un en face de l'autre pour le montage de l'axe de rotation (8) correspondant du bras (1).

2. Mécanisme d'accoudoirs pliable pour sièges de véhicules, selon la première revendication, caractérisé par le fait que le profilé sinueux (4) du prolongement (3) appartenant à la charpente du siège présente une saillie initiale (3a) suivie d'une partie entrante (3b) qui suit une branche convexe (3c), suivi d'une autre saillie (3d) pour se poursuivre dans une grande concavité (3d) et être couronnée en opposition à la saillie (3) dans une autre saillie accentuée (3f) de sorte que dans cette configuration sinueuse soit en appui la came (6) dans la rotation du bras (1), pour produire des rotations dans des sens appropriés de cette came-là (6) et occuper les positions stables correspondant à celle d'utilisation, pliant vers le bas et pliant vers le haut du propre bras (1).

3. Mécanisme d'accoudoirs pliable pour sièges de véhicules, selon des revendications précédentes, caractérisé par le fait que la came (6) présente un contour rectangulaire avec deux côtés légèrement courbes-concaves (6a et 6b) et deux autres (6c et 6d) de concavité nettement plus profonde, en déterminant quatre sommets arrondis (7a, 7b, 7c, 7d), pour que ces concavités et sommets déterminent les moyens de glissement, la cale et la rotation correspondante de la came (6) dans les mouvements respectifs d'élévation et de descente du bras (1) dans leur articulation sur l'axe (8).
